# EUROPÄISCHE PATENTSCHRIFT

(11) **EP 0 467 085 B1**
(45) Veröffentlichungstag und Bekanntmachung des Hinweises auf die Patenterteilung: **08.01.1997**
(21) Anmeldenummer: 91110041.0
(22) Anmeldetag: 18.06.1991
(51) Int. Cl.: H02P 6/00, H02P 6/14

(54) **Treiberschaltung für einen bürstenlosen Gleichstrommotor**
Driving circuit for brushless D.C. motor
Circuit d'attaque pour moteur à courant continu sans balai

(30) Priorität: 18.06.1990 DE 4019338
(43) Veröffentlichungstag der Anmeldung: 22.01.1992
(73) Patentinhaber: PAPST LICENSING GmbH, 78549 Spaichingen (DE)
(72) Erfinder: Hans, Helmut, Dr., W-7742 St. Georgen (DE); Moini, Mojtaba, W-7744 Königsfeld (DE)
(74) Vertreter: Westphal, Klaus, Dipl.-Ing.

(56) Entgegenhaltungen:
- EP-A- 0 084 156
- EP-A- 0 318 938
- WO-A-87/02528
- US-A- 4 052 650

## Beschreibung

Die Erfindung betrifft eine Treiberschaltung für einen bürstenlosen Gleichstrommotor nach dem Oberbegriff des Anspruchs 1.

Eine solche Treiberschaltung ist aus WO 87/02528 bereits für bürstenlose Gleichstrommotoren bekannt, die in Form einer integrierten Schaltung alle Schaltungselemente zur direkten Ansteuerung der Motorwicklungen enthält und mit einem Minimum von externen Bauelementen auskommt, nämlich einem Hall-IC als Rotorpositionsgeber und einem einzigen Kondensator als Zeitglied in einem Impulsformgenerator der Steuerschaltung.

Mit dieser bekannten Steuerschaltung ist es möglich, die dem Gleichstrommotor zugeführte Leistung abhängig von einem Sollwert oder einer Führungsgröße zu steuern oder zu regeln, so daß diese den Bedürfnissen angepaßt werden kann. So ist es z.B. möglich, bei der Verwendung des bürstenlosen Gleichstrommotors als Lüftermotor die Kühlleistung des Lüfters abhängig von der Wärmeentwicklung eines elektronischen Gerätes zu steuern, d.h., bei niedriger Wärmeentwicklung läuft der Lüfter langsam und entwickelt wenig Geräusch, während bei höherer Wärmeentwicklung der Lüfter schneller läuft und eine größere Kühlluftmenge zuführt. Diese bekannte Steuerschaltung einschließlich Endstufen wird mittels einer niedrigen Betriebsgleichspannung von z.B. 12V versorgt, die normalerweise dem sowieso vorhandenen Netzteil des elektronischen Gerätes entnommen wird.

Der Leistungsfähigkeit eines solchen bürstenlosen Gleichstrommotors einschließlich Steuerschaltung und Endstufen sind jedoch Grenzen gesetzt, die insbesondere von der in einer integrierten Schaltung maximal zulässigen Verlustleistung bestimnt werden. Darüber hinaus ist die aus dem Netzteil eines vorhandenen elektronischen Gerätes lieferbare Gleichstromleistung ebenfalls begrenzt. Deshalb werden normalerweise größere Lüfter direkt aus dem Wechselstromnetz gespeist, um das Netzteil des elektronischen Gerätes nicht zu überlasten. Ein solcher Lüfter ist dann jedoch in seiner Leistung normalerweise nicht regelbar, so daß auch bei niedriger, erforderlicher Kühlleistung der Lüfter mit voller Leistung und verhältnismäßig hohem Geräusch weiterläuft.

Eine weitere Steuerschaltung für einen bürstenlosen Gleichstrommotor ist in EP-A-0 318 938 beschrieben. Zwischen die Steuerschaltung und die Leistungsendstufe sind Optokoppler geschaltet, die ausschließlich zur Potentialtrennung von Leistungsendstufe und Steuerschaltung dienen. Obwohl bei dieser bekannten Schaltungsanordnung bereits eine getrennte Stromversorgung der Leistungsendstufe und der Steuerschaltung vorgesehen ist, zeichnet sich diese Treiberschaltung durch eine verhältnismäßig einfache Regelung der Lüfterleistung aus. Die Leistungsregelung des Lüfters wird nämlich ausschließlich durch ein pulsweitenmoduliertes Ein- und Ausschalten des Ausgangssignales der Steuerschaltung bewirkt.

Eine weitere Steuerschaltung für einen kollektorlosen Gleichstrommotor ist in EP-A-0 084 156 beschrieben. Die Treiberschaltung weist eine Leistungsendstufe, eine Steuerschaltung, eine Stromversorgungseinrichtung sowie Zwischentreiberstufen auf. Die Leistungsendstufe wird durch die Steuerschaltung nur dann eingeschaltet, wenn die Treiberstufe abgeschaltet ist. Zudem wird die Amplitude des rechteckförmigen Ausgangssignales der Treiberstufen nicht durch die Amplitude des Steuersignales am Ausgang der Steuerschaltung bestimmt, sondern vom Widerstandswert eines PTC-Widerstandes. Die Leistungsendstufen sind bei dieser bekannten Schaltungsanordnung an eine Betriebsspannung zwischen 8 Volt und 30 Volt angeschlossen.

Der vorliegenden Erfindung liegt die Aufgabe zugrunde, eine Treiberschaltung für einen bürstenlosen Gleichstromnotor, insbesondere einen Lüftermotor, vorzuschlagen, die eine optimale Ansteuerung der Leistungsendstufe auch bei großen Motoren erlaubt und eine geringe Geräuschentwicklung verursacht.

Diese Aufgabe wird durch eine Treiberschaltung mit den Merkmalen des Anspruchs 1 gelöst.

Eine solche Treiberschaltung hat den wesentlichen Vorteil, daß eine bereits vorhandene Steuerschaltung für niedrigere Leistungen zur flexiblen Steuerung bzw. Regelung des Gleichstrommotors eingesetzt werden kann und die Leistungserhöhung durch die entsprechenden zusätzlichen Leistungsendstufen mit nur wenigen Bauelementen realisiert werden kann. Das erforderliche Hilfsnetzteil braucht nur eine verhältnismäßig niedrige Leistung zu haben, weil die Endstufen der vorhandenen Steuerschaltung nur mit verhältnismäßig niedrigem Ausgangsstrom betrieben werden.

Weiterbildungen der Erfindung sind Gegenstand der Unteransprüche.

Eine vorteilhafte Ausgestaltung der Erfindung sieht vor , daß die Steuerschaltung rampenförmige Ausgangsimpulse liefert, wobei innerhalb jeder Kommutierungsphase ein Impuls liegt, die bei niedrigeren Ausgangsleistungen die Form symmetrischer Dreiecksimpulse variabler Amplitude haben und bei weiterem Ansteigen in die Form von Trapezimpulsen variabler Breite übergehen. Durch die Verwendung einer solchen Steuerschaltung zur Ansteuerung der Leistungsendstufen ergibt sich der große Vorteil, daß die gesamte Treiberschaltung bei niedrigen Leistungen im Analog-Betrieb mit verhältnismäßig flachen Anstiegs- und Abfallflanken der Ausgangsimpulse arbeitet, so daß der Gleichstrommotor im Betrieb nur geringe Geräusche verursacht. Bei einem Ansteigen der Ausgangsleistung dagegen, arbeitet die Treiberschaltung im Analog-/Schalterbetrieb mit trapezförmigen Ausgangsimpulsen bei einem besseren Wirkungsgrad, so daß die Verlustleistungen in den Leistungsendstufen nicht zu stark ansteigen. Die dabei auftretenden etwas höheren Geräusche des Motors stören im Falle eines Lüfterbetriebes kaum, da die Geräusche des Lüfters ebenfalls ansteigen. Die Dreiecks- bzw. Trapezimpulse der Treiberschaltung liegen vorzugsweise symmetrisch innerhalb der Kommutierungsphasen des Motors, um zu einem möglichst hohen Wirkungsgrad zu kommen.

Das Hilfsnetzteil ist vorzugsweise als integrierte Schaltung ausgebildet, die mittels eines getakteten Schalters und eines Ladekondensators aus dem Wechselstromnetz eine gesiebte und geregelte Gleichspannung ableitet. Eine solche Schaltung hat den Vorteil, daß sie ohne einen Netztransformator auskommt und trotzdem einen verhältnismäßig hohen Wirkungsgrad aufweist.

Die Erfindung wird nachfolgend anhand eines Ausführungsbeispiels unter Bezug auf die beigefügten Zeichnungen näher erläutert.

Es zeigen:
- Fig. 1: das Blockschaltbild der erfindungsgemäßen Treiberschaltung;
- Fig. 2: ein Impulsdiagramm für die verschiedenen Impulszüge der Treiberschaltung nach Fig. 1;
- Fig. 3: ein Stromversorgungsteil;
- Fig. 4: die Drehzahlregelungs- und die Leistungsendstufen.

An ein Wechselstromnetz 6 von z.B. 230V ist eine Gleichrichterschaltung 2 angeschlossen, die ohne Verwendung eines Transformators aus dieser Wechselspannung eine Ausgangsgleichspannung 10 von z.B. 200 - 300 V erzeugt. Diese Ausgangsgleichspannung 10 wird einer Leistungsendstufe 3 zugeleitet, die direkt über Ausgangsleitungen 14a und 14b einen bürstenlosen Gleichstrommotor 5 speist.

Die Ansteuerung der Leistungsendstufen 3 erfolgt mittels einer Steuerschaltung 4 über Ausgangsleitungen 13a und 13b. Diese Steuerschaltung 4, einschließlich einer nachgeschalteteten Zwischentreiberstufe 3a wird mittels eines Hilfsnetzteils 1 aus dem Wechselstromnetz 6 gespeist. Das Hilfsnetzteil 1 erzeugt an seinem Ausgang 9 eine niedrige Ausgangsgleichspannung von z.B. 12V, für die die Steuerschaltung 4 und die Zwischentreiberstufe 3a ausgelegt sind. Die von dem Hilfsnetzteil 1 aufzubringende Leistung ist verhältnismäßig gering, da die Leistung für den Antrieb des bürstenlosen Gleichstrommotors 5 durch die Gleichrichterschaltung 2 direkt aus dem Netz 6 bereitgestellt wird.

Der Gleichrichterschaltung 2 enthält noch eine Überwachungsschaltung 2a, die in bekannter Weise für eine Einschaltstrombegrenzung und Überstrombegrenzung sorgt.

Nachdem die Stromversorgung der einzelnen Einheiten der Treiberschaltung mittels einer direkt an das Netz 6 angeschlossenen Gleichrichterschaltung 2 und mittels eines zusätzlichen Hilfsnetzteils 1 beschrieben wurde, soll nun die Funktion der Treiberschaltung in Verbindung mit der speziellen Steuerschaltung 4 erläutert werden:

Die Steuerschaltung 4 ist in der Form einer integrierten Schaltung ausgebildet, wie sie z.B. in der bereits genannten PCT-Druckschrift WO 87/02528 dargestellt ist. Diese Steuerschaltung enthält alle Bauelemente zur Ansteuerung der Motorwicklungen eines bürstenlosen Gleichstrommotors geringerer Leistung über Ausgangsleitungen 13a und 13b, die an interne Endstufen der Steuerschaltung 4 angeschlossen sind. Ein Rotorpositionsgeber 5a des Motors 5, vorzugsweise als Hall-IC ausgebildet, liefert über die Leitung 11 Rechteckimpulse 11a, 11b, wie in Fig. 2 gezeigt ist. Der Impuls 11a bestimmt hierbei die Kommutierungsphase für eine der Motorwicklungen, während die Impulspause 11b die Kommutierungsphase für die andere Motorwicklung definiert. Aus den Motorwicklungen werden außerdem, in bekannter Weise, Spannungen ausgekoppelt, die der Drehzahl des Motors 5 proportional sind. Diese gelangen über eine Leitung 12 in die Steuerschaltung 4. Von den Ausgangssignalen 11 des Rotorpositionsgebers 5a wird eine Dreiecksspannung 20 (siehe Fig. 2) abgeleitet, deren Impulse symmetrisch zu den Kommutierungsphasen 11a bzw. 11b des Rotorpositionsgebers 5a liegen. Die Breite der Dreiecksimpulse entspricht - unabhängig von der Drehzahl des Motors 5 - etwa der Breite der Kommutierungsphase 11a bzw. 11b, und zwar wird dies unter Auswertung der der Drehzahl des Motors 5 proportionalen Spannung 12 und in Verbindung mit einem externen Kondensator 8 als Zeitglied erreicht. Einzelheiten dieser Schaltung sind der bereits genannten PCT-Druckschrift WO 87/02528 zu entnehmen.

Der Steuerschaltung 4 wird ein Sollwert 7 bzw. eine Führungsgröße zugeleitet, die einen Schwellwert 21a bzw. 21b bestimmt. Ist der Sollwert 7 gering, so liegt z.B. ein Schwellwert in der Höhe der gestrichelten Linie 21a vor. Die Steuerschaltung 4 bewirkt, daß der diese Schwelle übersteigende Anteil der Dreiecksspannung 20 von der jeweiligen Endstufe der Steuerschaltung 4 als Ausgangssignal 13a bzw. 13b ausgegeben wird, wie es Fig. 2 für die beiden Ausgangsleitungen 13a bzw. 13b zeigt. Die Dreiecksimpulse 22a und 22b gehören zu dem Schwellwert 21a. Wird der Sollwert 7 erhöht, so wird der Schwellwert in Richtung auf den niedrigeren Wert 21b erniedrigt. Der diesen Schwellwert 21b übersteigende Anteil der Dreiecksspannung 20 ist nunmehr größer, wie aus den Impulszügen 13a bzw. 13b der Fig. 2 hervorgeht. Es entstehen hierbei an sich Dreiecksimpulse 23a bzw. 23b von höherer Amplitude. Die Spitzen dieser Dreiecksimpulse werden jedoch nicht wirksam, da die Endstufen innerhalb der Steuerschaltung 4 bzw. die Leistungsendstufen 3 sich bereits in der Sättigung befinden. Aus den Dreiecksimpulsen höherer Amplitude werden also trapezförmige Impulse 23a bzw. 23b. In Fig. 2 ist durch die gestrichelte Linie 24 diese Schwelle eingezeichnet, von der aus die Endstufentransistoren in die Sättigung übergehen.

Die Steuerschaltung 4 bewirkt also, daß an ihren Ausgangsleitungen 13a bzw. 13b in der jeweiligen Kommutierungsphase 11a bzw. 11b Dreiecksimpulse 22a bzw. 22b variabler Amplitude erzeugt werden, wobei bei höheren Werten diese Impulse in Trapezform 23a bzw. 23b übergehen. Es ist zu erkennen, daß sowohl die Dreiecksimpulse 22a und 22b als auch die Trapezimpulse 23a und 23b symmetrisch innerhalb der Kommutierungsphasen lla bzw. 11b liegen, so daß sich ein optimaler Wirkungsgrad für den Gleichstrommotor 15 ergibt.

Die Steuerschaltung 4 enthält ggfs. auch eine Regelschaltung, um die Ausgangssignale 13a, 13b bzw. 14a, 14b abhängig von dem Sollwert 7 und einer rückgeführten Drehzahlspannung 12 zu regeln.

Die Endstufen in der Steuerschaltung 4 sind normalerweise für den direkten Betrieb eines Gleichstrommotors mit geringerer Leistung geeignet. Um über die Leistungsendstufen 3 die Motorwicklungen mit höherer Leistung direkt proportional den Ausgangssignalen 13a bzw. 13b anzusteuern, sind zwischen der Steuerschaltung 4 und den Leistungsendstufen 3 Zwischentreiberstufen 3a vorgesehen, die die entsprechende Signalanpassung bewirken und außerdem dafür sorgen, daß der Ausgangsstrom in den Leitungen 14a und 14b direkt proportional den Ausgangssignalen 13a und 13b der Steuerschaltung 4 sind.

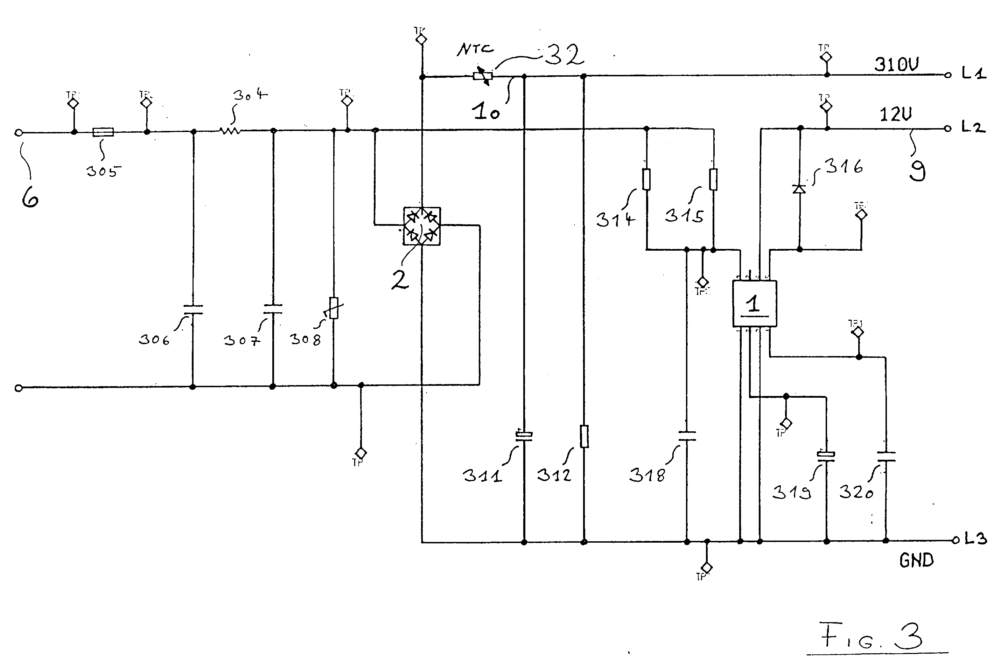

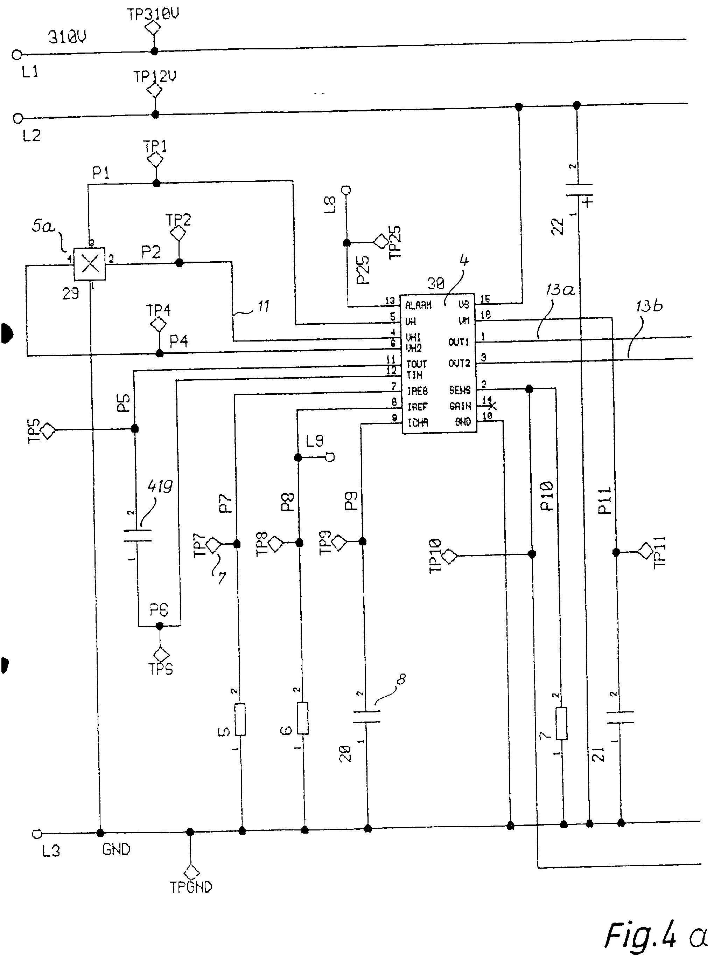

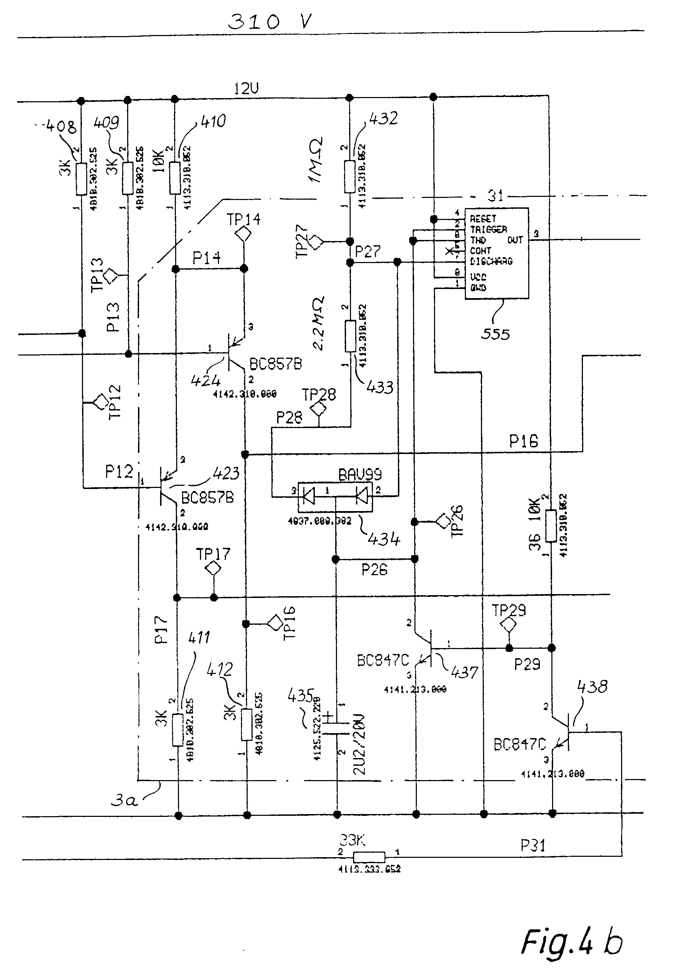

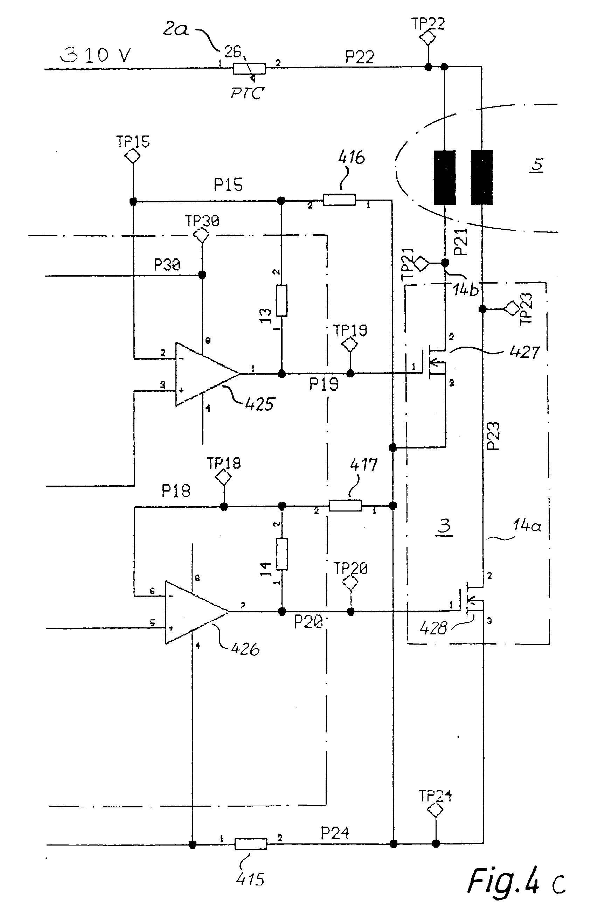

### Beschreibung der Figuren 3 und 4

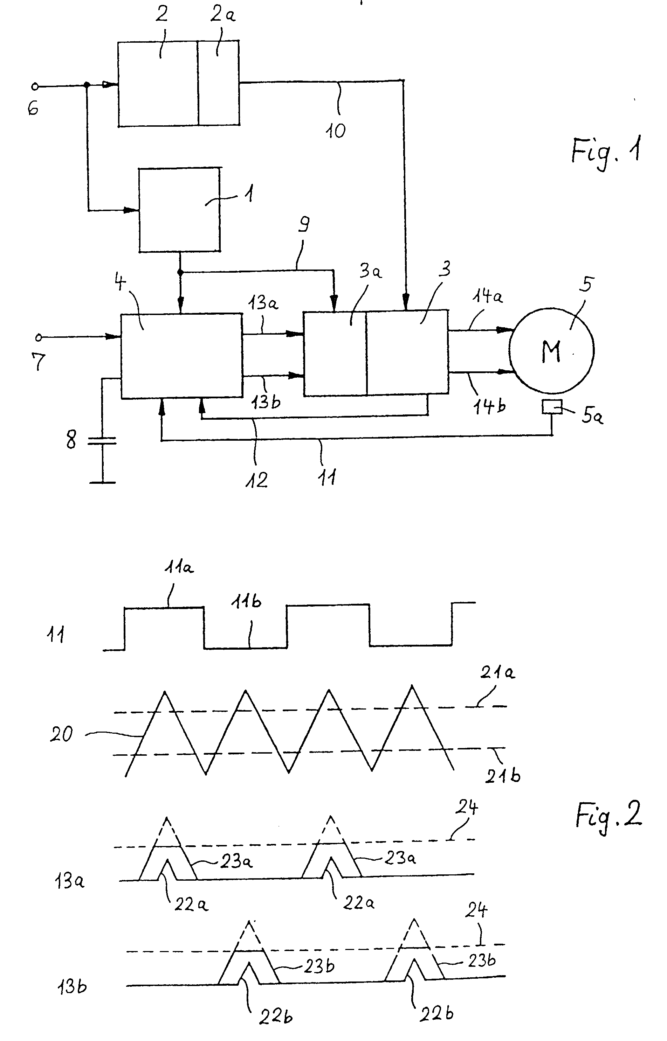

Die zusammengehörenden Figuren 3 und 4 stellen die beste Ausführungsform dar und geben im Vergleich zu Figur 1 zusätzliche Einzelheiten wieder. Figur 3 stellt einen Stromversorgungsteil dar, während in Figur 4 die Drehzahlregelungs- und die Leistungsendstufen wiedergegeben sind sowie Zwischentreiberstufen und eine Überwachungsschaltung.

In Figur 3 werden neben den Eingangsklemmen für das Wechselstromnetz 6 die Ausgangsklemmen L1 für 310 Volt Gleichspannung gezeigt, L2 für 12 Volt Gleichspannung, während L3 den Masseanschluß darstellt. Darüberhinaus existieren eine Anzahl an Testpunkten TP, wie sie zur Überprüfung der Schaltung nützlich sind. Die Netzspannung wird zunächst über ein Sicherungselement 305 gegen Kurzschlüsse abgesichert. Eine LC-Kombination bestehend aus der Induktivität 304 und den Kondensatoren 306, 307 sorgt im Zusammenspiel mit einem Varistor 308 für die Begrenzung von Überspannungsimpulsen sowie die EµV-Störunterdrückung. Die Netzschaltung wird sodann mit der Gleichrichterschaltung 2 gleichgerichtet und über einen Vorwiderstand 32 (NTC-Widerstand) auf die Leitung 10 bzw. L1 gegeben. Die zugehörige Masseleitung ist mit den Buchstaben GND gekennzeichnet und führt auf die Ausgangsklemme L3. Die Ausgangsgleichspannung auf der Leitung 10 wird durch den Kondensator 311 geglättet, dem ein Entladewiderstand 312 parallelgeschaltet ist. Die am Widerstand 304 abgreifbare Netzspannung wird weiterhin über Vorwiderstände 314, 315 auf den Eingang des Hilfsnetzteils 1 gelegt. Von dort ist ein weiterer Kondensator 318 gegen Massepotential geschaltet. Das Hilfsnetzteil ist mit einer oder mehreren Leitungen ebenfalls direkt mit Massepotential verbunden. Die Glättungskondensatoren 319 und 320 verbinden das Hilfsnetzteil 1 ebenfalls mit Massepotential. An der Ausgangsleitung 9 erzeugt das Hilfsnetzteil eine Spannung von etwa 12 Volt. Diese wird überwacht durch eine Z-Diode 316. -In Figur 4 wird die hohe Versorgungsgleichspannung über Anschlußpunkt L1 über die Überwachungsschaltung 2a (hier ausgeführt als PTC-Widerstand) den Statorspulen des Gleichstrommotors 5 zugeführt. Diese sind mittels der Leitung 14a bzw. 14b an die zugehörigen Feldeffekttransistoren 428 bzw. 427 der Endstufe 3 angeschlossen. Die Ansteuersignele für die Transistoren 427 und 428 leiten sich ab wie bereits oben erwähnt von den Ausgangssignalen des Rotorpositionsgebers 5a, welcher seine Versorgungsspannung aus der Steuerschaltung 4 bezieht und ebenfalls seine Nutzsignale über die Leitung 11 dorthin zurückgibt. Am Kondensator 419 steht die Dreieckspannung zur Verfügung, während am Kondensator 8 der DrehzahlIstwert abgegriffen werden kann. Die Ausgangssignale der Steuerschaltung 4 werden über Leitungen 13a und 13b auf die Basen der Transistoren 423 bzw. 424 gegeben, wobei die Basen über die Widerstände 408 bzw. 409 mit einer positiven Vorspannung versehen werden. Die Transistoren 423, 424 sind PNP-Transistoren, deren Emitter über einen gemeinsamen Vorwiderstand 410 mit der niedrigen Versorgungsspannung von etwa 12 Volt verbunden sind. Beide Transistoren sind mit jeweils einem Kollektorwiderstand (411,412) von etwa 3 Kiloohm gegen Masse geschaltet. Das an den Kollektoren abgreifbare Signal wird jeweils direkt auf die nicht-invertierenden Eingänge der Stromregelstufen 425 bzw. 426 gegeben. Diese bestehen aus Operationsverstärkern, deren Ausgangssignal zum einen direkt auf die Gates der Endstufentransistoren 427 und 428 geleitet wird, zum anderen über Rückkopplungswiderstände von etwa 33 Kiloohm jeweils auf den invertierenden Eingang zurückgeführt wird. Die invertierenden Eingänge fühlen des weiteren jeweils über einen Vorwiderstand 416, 417 von jeweils etwa 3 Kiloohm eine Spannung am Strommeßwiderstand 415 ab, die dem Motorstrom proportional ist. Auf diese Weise wird sichergestellt, daß die Endtransistoren 427 und 428 nach Maßgabe der Ausgangssignale auf Leitungen 13a und 13b leitfähig gemacht werden. Die Operationsverstärker der Stromregelstufen 425 und 426 erhalten ihre Versorgungsspannung über den Ausgang einer Wiederanlaufschaltung 555, die im Falle einer länger andauernden Überlast bzw. Blockieren des Motors 5 für einen zuverlässigen Wiederanlauf des Motors sorgt. Hierzu ist vorgesehen, daß in einem solchen Überlastfalle die Stromregelstufen 425 und 426 etwa eine Sekunde lang Versorgungsspannung erhalten, worauf für etwa vier Sekunden deren Versorgungsspannung wieder abgeschaltet wird. Dies gibt der Überwachungsschaltung 2a (PTC-Widerstand) Gelegenheit, sich genügend abzukühlen und einen Nominalanlaufstrom bereitzustellen. Die Wirkungsweise der Wideranlaufschaltung beruht darauf, daß die Steuerschaltung 4 auf die Basis des Transistors 438 ein drehzahlproportionales Trigger-Signal gibt (zwei Impulse pro Motorumdehung), welches nach weiterer Invertierung über den Transistor 437 dazu führt, daß der Kondensator 435 nicht nennenswert über den Vorwiderstand 432 und den rechten Arm der Doppeldiode 434 aufgeladen werden kann. Sofern diese Trigger-Pulse ausbleiben, lädt sich Kondensator 435 auf, so daß der Kollektor des Transistors 437 nach einigen Sekunden auf einem erhöhten Potential liegt und über den Trigger-Eingang der Wiederanlaufschaltung 555 diese in Oszillation versetzt. Dieses wird dadurch erreicht, daß ein Entladeausgang der Wiederanlaufschaltung 555 über Entladewiderstand 433 und linken Arm der Doppeldiode 434 den Kondensator 435 entladen kann. Da der Widerstand 433 hoch-ohmiger ist als Aufladewiderstand 432, dauert die Entladung etwa viermal länger als die Aufladung des Kondensators 435. Die Stromregelstufen 425 und 426 werden also in einem ca. 5-Sekunden-Rhythmus jeweils für etwa eine Sekunde mit Versorgungsspannung versehen, und zwar so lange bis nach Wiederanlauf des Motors 5 die Steuerschaltung 4 erneut Trigger-Impulse auf die Basis des Transistors 438 gibt, so daß der Kondensator 435 ständig entladen gehalten werden kann.

Es versteht sich, daß die beschriebene Wiederaralaufschaltung auch mit anderen Vorrichtungen betrieben werden kann, welche durch einen PCT-Widerstand geschützt sind und welche im Normalfall eine Mindestanzahl an Impulsen pro Zeiteinheit bereitstellen, wie z. B. Schaltnetzteilen.

## Patentansprüche

1. Treiberschaltung für einen bürstenlosen Gleichstrommotor mit:
- mindestens einer Leistungsendstufe (3) für Motorwicklungen des Gleichstrommotors (5);
- einer Steuerschaltung (4) zum Ansteuern der Leistungsendstufe (3) mit dreiecks- oder trapezförmigen Ausgangssignalen (13a, 13b), welche von einer Sensoreinrichtung (5a) hinsichtlich der Kommutierungsphasen steuerbar und nach Maßgabe eines Sollwertes oder einer Führungsgröße (7) einstellbar sind;
- einer Stromversorgungseinrichtung (1, 2, 2a) zur Stromversorgung der Leistungsendstufe (3) mit einer gleichgerichteten Betriebsspannung (10) und zur Stromversorgung der Steuerschaltung (4);
**gekennzeichnet durch die Merkmale:**
- einer zwischen der Leistungsendstufe (3) und der Steuerschaltung (4) geschalteten Zwischentreiberstufe (3a), durch welche Ausgangsströme (14a, 14b) der Leistungsendstufe (3) dreiecksoder trapezförmig sind und entsprechend zu den dreiecks- oder trapezförmigen Ausgangssignalen (13a, 13b) der Steuerschaltung (4) proportional regelbar sind, und
- die Stromversorgungseinrichtung (1, 2, 2a) stellt zur Stromversorgung der Steuerschaltung (4) eine gleichgerichtete und im Vergleich zur Betriebsspannung (10) der Leistungsendstufe (3) niedrigere Betriebsspannung (9) bereit, wobei die Leistungsendstufe (3) ohne Verwendung eines Transformators über eine Gleichrichterschaltung (2) an Klemmen eines Wechselstromnetzes (6) geschaltet ist, ein Hilfsnetzteil (1) vorgesehen ist, das an die Klemmen des Wechselstromnetzes (6) geschaltet ist und die niedrigere Betriebsspannung (9) für die Steuerschaltung (4) sowie die Zwischentreiberstufe (3a) zur Verfügung stellt.

2. Treiberschaltung nach Anspruch 1, dadurch gekennzeichnet, daß die Zwischentreiberstufe (3a) die Steuerschaltung (4) galvanisch an die Leistungsendstufe (3) koppelt.

3. Treiberschaltung nach einem der Ansprüche 1 bis 2, dadurch gekennzeichnet, daß der bürstenlose Gleichstrommotor (5) ein Lüftermotor mit Rotorpositionsgeber (5a) als Sensoreinrichtung ist.

4. Treiberschaltung nach Anspruch 3, dadurch gekennzeichnet, daß die Steuerschaltung (4) abhängig von einem Ausgangssignal (11) des Rotorpositionsgebers (5a) Kommutierungsphasen des Lüftermotors festlegt.

5. Treiberschaltung nach einem der Ansprüche 1 bis 4, dadurch gekennzeichnet, daß durch die Steuerschaltung (4) die Ausgangssignale (13a, 13b) zum Ansteuern der Leistungsendstufe (3) in ihrer Amplitude und/oder Dauer einstellbar sind.

6. Treiberschaltung nach einem der Ansprüche 3 bis 5, dadurch gekennzeichnet, daß die Steuerschaltung (4) als integrierte Schaltung ausgebildet ist und folgende Einheiten enthält:
- eine Speiseschaltung zur Stromversorgung des Rotorpositionsgebers (5a),
- eine Schaltung zur Festlegung der Kommutierungsphasen der Motorwicklungen abhängig von den Ausgangssignalen des Rotorpositionsgebers (5a),
- eine Impulsformerschaltung zur Steuerung bzw. Regelung der Amplitude und/oder Dauer der Ausgangssignale für die einzelnen Motorwicklungen abhängig von einem Sollwert (7) oder einer Führungsgröße,
- Endstufen zur Bereitstellung der Ausgangssignale für die Motorwicklungen.

7. Treiberschaltung nach einem der Ansprüche 1 bis 6, dadurch gekennzeichnet, daß die durch die Steuerschaltung (4) bereitgestellten Ausgangssignale (13a,13b) Impulse sind, wobei innerhalb jeder Kommutierungsphase (11a, 11b) ein Impuls liegt, der bei niedriger Ausgangsleistung die Form eines symmetrischen Dreiecksimpulses (22a, 22b) variabler Amplitude aufweist und bei weiterem Ansteigen in die Form eines Trapezimpulses (23a, 23b) variabler Breite übergeht.

8. Treiberschaltung nach Anspruch 7, dadurch gekennzeichnet, daß die Dreiecks- bzw. Trapezimpulse symmetrisch innerhalb der Kommutierungsphasen (11a, 11b) liegen.

9. Treiberschaltung nach einem der Ansprüche 1 bis 8, dadurch gekennzeichnet, daß das Hilfsnetzteil (1) eine integrierte Schaltung ist, die mittels eines getakteten Schalters und eines Ladekondensators aus dem Wechselstromnetz (6) eine gesiebte und geregelte Gleichspannung ableitet.

10. Treiberschaltung nach einem der Ansprüche 1 bis 9, dadurch gekennzeichnet, daß die Gleichrichterschaltung (2) für die Leistungsendstufe (3) eine Überwachungsschaltung (2a) zur Einschaltstrombegrenzung und Überstrombegrenzung enthält.

11. Treiberschaltung nach einem der Ansprüche 1 bis 10, dadurch gekennzeichnet, daß eine Restart-Schaltung vorhanden ist, welche eine separate Versorgungsspannung an die Zwischentreiberstufe (3a) liefert, wobei die separate Versorgungsspannung entweder einen Nominalwert beibehält, sofern der Motor sich in seiner regulären Betriebsweise befindet, oder die separate Versorgungsspannung in einer intermittierenden Weise an die Zwischentreiberstufe (3a) geliefert wird, sofern der Motor blockiert oder überlastet ist.

12. Treiberschaltung nach Anspruch 11, dadurch gekennzeichnet, daß die Restart-Schaltung mit einer Folge von Triggerpulsen beaufschlagt wird, wobei das Ausgangssignal der Restart-Schaltung einen vordefinierten Spannungspegel aufweist, sofern die Triggerpulse eine höhere Frequenz als eine vorbestimmte Grenzfrequenz aufweisen, und das Ausgangssignal der Restart-Schaltung einen anderen vordefinierten Spannungspegel aufweist, sofern die Triggerpulse eine geringere Frequenz als eine vorbestimmte Grenzfrequenz aufweisen, wobei die Restart-Schaltung einen Zeitsteuerbaustein (555) einen Ladewiderstand (432), einen Entladewiderstand (433), einen Kondensator (435), Entkoppeldioden (434), einen Entlader (437) und einen Verstärker (438) aufweisen.

13. Treiberschaltung nach einem der Ansprüche 1 bis 12, dadurch gekennzeichnet, daß die Zwischentreiberstufe (3a) für jedes Ausgangssignal (13a, 13b) der Steuerschaltung (4) eine Transistorverstärkerstufe (423, 424) in Emitterschaltung mit nachgeschalteter Stromregelstufe (425, 426) aufweist, wobei ein Ausgang der Stromregelstufe (425, 426) mit einem Steuereingang einer zugeordneten Leistungsendstufe (3) gekoppelt ist.

14. Treiberschaltung nach Anspruch 13, dadurch gekennzeichnet, daß die Stromregelstufe (425, 426) ein rückgekoppelter Operationsverstärker ist, dessen nicht invertierender Eingang (+) mit einem Ausgang der Emitterschaltung des Transistorverstärkers (423, 424) verbunden ist, dessen invertierender Eingang (-) mit dem Ausgang des Operationsverstärkers über einen Rückkopplungswiderstand verbunden ist, und dessen Ausgang mit dem Steuereingang der zugeordneten Leistungsendstufe (3) gekoppelt ist.

15. Treiberschaltung nach Anspruch 14, dadurch gekennzeichnet, daß zwischen Bezugspotential und nicht invertierendem Eingang (+) des Operationsverstärkers (425, 426) ein Kollektorwiderstand als Strommeßwiderstand (415, 416) geschaltet ist.

## Claims

1. A driving circuit for a brushless direct current motor with:
- at least one final power output stage (3) for motor windings of the direct current motor (5);
- a control circuit (4) for operating the final power output stage (3) with triangular or trapezoidal output signals (13a, 13b) which can be adjusted by a sensor device (5a) in the light of commutating phases and as determined by a desired value or a guide variable (7);
- a power supply means (1, 2, 2a) for supplying power to the final power output stage (3) with a rectified operating voltage (10) and for supplying power to the control circuit (4);
characterised by the features:
- of an intermediate driver stage (3a) incorporated between the final power output stage (3) and the control circuit (4) by which output currents (14a, 14b) of the final power output stage (3) are triangular or trapezoidal and can be regulated in proportion to the triangular or trapezoidal output signals (13a, 13b) of the control circuit (4) and
- the power supply means (1, 2, 2a) provides, for supplying power to the control circuit (4), a rectified operating voltage (9) which is lower in comparison with the operating voltage (10) of the final power output stage (3), whereby the final power output stage (3), without using a transformer, is connected to terminals of an alternating current network (6) via a rectifying circuit (2), an auxiliary mains unit (1) is provided which is connected to the terminals of the alternating current network (6) and makes available the lower operating voltage (9) for the control circuit (4) and the intermediate driver stage (3a).

2. A driving circuit according to Claim 1, characterised in that the intermediate driver stage (3a) couples the control circuit (4) galvanically to the final power output stage (3).

3. A driving circuit according to one of Claims 1 to 2, characterised in that the brushless direct current motor (5) is a fan motor with a rotor position transmitter (5a) serving as the sensor means.

4. A driving circuit according to Claim 3, characterised in that the control circuit (4) fixes commutation phases of the fan motor as a function of an output signal (11) from the rotor position transmitter (5a).

5. A driving circuit according to one of Claims 1 to 4, characterised in that the output signals (13a, 13b) for operating the final power output stage (3) in their amplitude and/or duration are adjustable by the control circuit (4) .

6. A driving circuit according to one of Claims 3 to 5, characterised in that the control circuit (4) is constructed as an integrated circuit and contains the following units:
- a feed circuit for supplying current to the rotor position transmitter (5a),
- a circuit for establishing the commutation phases of the motor windings as a function of the output signals from the rotor position transmitter (5a),
- a pulse-forming circuit for controlling or regulating the amplitude and/or duration of the output signals for the individual motor windings as a function of a desired value (7) or of a guide variable,
- output stages to make output signals available to the motor windings.

7. A driving circuit according to one of Claims 1 to 6, characterised in that the output signals (13a, 13b) provided by the control circuit (4) are pulses whereby within each commutation phase (11a, 11b) there is a pulse which, for a lesser output power, has the form of a symmetrical triangular pulse (22a, 22b) of variable amplitude and which can, upon a further rise, merge into the form of a trapezoidal pulse (23a, 23b) of variable width.

8. A driving circuit according to Claim 7, characterised in that the triangular or trapezoidal pulses are located symmetrically within the commutation phases (11a, 11b).

9. A driving circuit according to one of Claims 1 to 8, characterised in that the auxiliary mains unit (1) is an integrated circuit which, by means of a clocked switch and a charging capacitor, derives a filtered and regulated direct current voltage from the alternating current network (6).

10. A driving circuit according to one of Claims 1 to 9, characterised in that the rectifier circuit (2) for the final power output stage (3) contains a monitoring circuit (2a) for limiting the connection current and limiting the over-voltage current.

11. A driving circuit according to one of Claims 1 to 10, characterised in that a restart circuit is provided which delivers a separate supply voltage to the intermediate driver stage (3a), the separate supply voltage retaining either a nominal value in so far as the motor is in its regular operating mode or the separate supply voltage is supplied intermittently to the intermediate driver stage (3a) if the motor is blocked or overloaded.

12. A driving circuit according to Claim 11, characterised in that the restart circuit has a sequence of trigger pulses applied to it, the output signal from the restart circuit having a predefined voltage lever in so far as the trigger pulses are at a higher frequency than the predetermined limit frequency and the output signal of the restart circuit is at a different predefined voltage level in so far as the trigger pulses have a lower frequency than a predetermined limit frequency, whereby the restart circuit comprises a time-control component (555), a charging resistor (432), a discharging resistor (433), a capacitor (435), decoupling diodes (434), a discharger (437) and an amplifier (438).

13. A driving circuit according to one of Claims 1 to 12, characterised in that the intermediate driver stage (3a) comprises for each output signal (13a, 13b) from the control circuit (4) a transistorised amplifier stage (423, 424) in emitter circuit with a current control stage (425, 426) on the downstream side, an output from the current control stage (425, 426) being coupled to a control input of an associated final power output stage (3).

14. A driving circuit according to Claim 3, characterised in that the current control stage (425, 426) is a feedback operational amplifier of which the non-inverting input (+) is connected to an output of the emitter circuit of the transistorised amplifier (423, 424) of which the inverting input (-) is connected to the output of the operational amplifier via a feedback resistor and the output of which is coupled to the control input of the associated final power output stage (3).

15. A driving circuit according to Claim 14, characterised in that between the reference potential and the non-inverting input (+) of the operational amplifier (425, 426) there is a collector resistance which acts as a current measuring resistor (415, 416).

## Revendications

1. Circuit d'attaque pour un moteur à courant continu sans balai comprenant :
- un étage de sortie de puissance (3) pour les enroulements du moteur à courant continu (5),
- un circuit de commande (4) pour commander les étages de sortie de puissance (3) avec des signaux de sortie (13a, 13b) de forme triangulaire ou trapézoïdale, qui sont commandés par une installation de détection (5a) pour les phases de commutation et sont réglés par l'indication d'une valeur de consigne ou d'une grandeur guide (7),
- une installation d'alimentation en courant (1, 2, 2a) pour l'alimentation électrique de l'étage de puissance (3) avec une tension de fonctionnement (10) redressée et pour l'alimentation électrique du circuit de commande (4),
caractérisé par
- un étage d'attaque intermédiaire (3a) branché entre l'étage de puissance (3) et le circuit de commande (4), qui donne aux courants de sortie (14a, 14b) de l'étage de puissance (3) une forme triangulaire ou trapézoïdale, et ceux-ci étant réglables proportionnellement aux signaux de sortie triangulaires ou trapézoïdaux (13a, 13b) du circuit de commande (4) et,
- l'installation d'alimentation électrique (1, 2, 2a) fournit, pour l'alimentation électrique du circuit de commande (4), une tension de fonctionnement (9) redressée et plus faible par comparaison à la tension de fonctionnement (10) de l'étage de puissance (3), l'étage de puissance (3) étant branché sans transformateur, par un redresseur (2), aux bornes d'un réseau alternatif (6), une partie de réseau auxiliaire (1) étant prévue branchée sur les bornes du réseau alternatif (6) et la tension de fonctionnement (9) la plus faible étant disponible pour le circuit de commande (4) et pour l'étage d'attaque intermédiaire (3a).

2. Circuit d'attaque selon la revendication 1,
caractérisé en ce que
l'étage d'attaque intermédiaire (3a) assure le couplage galvanique du circuit de commande (4) à l'étage de puissance (3).

3. Circuit d'attaque selon l'une des revendications 1 et 2,
caractérisé en ce que
le moteur à courant continu (5), sans balais, est un moteur de ventilateur à capteur de position de rotor (5a), comme installation de détection.

4. Circuit d'attaque selon la revendication 3,
caractérisé en ce que
le circuit de commande (4) fixe les phases de commutation du moteur de ventilateur en fonction d'un signal de sortie (11) du capteur de position (5a) du rotor.

5. Circuit d'attaque selon l'une des revendications 1 à 4,
caractérisé en ce que
le circuit de commande (4) permet de régler l'amplitude et/ou la durée des signaux de sortie (13a, 13b) pour commander l'étage de sortie de puissance (3).

6. Circuit d'attaque selon l'une des revendications 3 à 5,
caractérisé en ce que
le circuit de commande (4) est un circuit intégré comportant les éléments suivants :
- un circuit d'alimentation pour l'alimentation électrique du capteur de position de rotor (5a),
- un circuit pour fixer les phases de commutation des enroulements du moteur en fonction des signaux de sortie du capteur de position de rotor (5a),
- un circuit de formation d'impulsions pour commander ou réguler l'amplitude et/ou la durée des signaux de sortie des différents enroulements du moteur en fonction d'une valeur de consigne (7) ou d'une grandeur guide,
- des étages de puissance pour fournir les signaux de sortie destinés aux enroulements du moteur.

7. Circuit d'attaque selon l'une des revendications 1 à 6,
caractérisé en ce que
les signaux de sortie (13a, 13b) fournis par le circuit de commande (4) sont des impulsions et, à l'intérieur de chaque phase de commutation (11a, 11b), on a une impulsion qui, pour la faible puissance de sortie, se présente sous la forme d'une impulsion triangulaire symétrique (22a, 22b) d'amplitude variable et qui, pour une augmentation de la puissance, prend la forme d'une impulsion trapézoïdale (23a, 23b) de largeur variable.

8. Circuit d'attaque selon la revendication 7,
caractérisé en ce que
les impulsions triangulaires ou trapézoïdales sont situées de manière symétrique à l'intérieur des phases de commutation (11a, 11b).

9. Circuit d'attaque selon l'une des revendications 1 à 8,
caractérisé en ce que
la partie de réseau auxiliaire (1) est un circuit intégré qui fournit, à l'aide d'un commutateur cadencé et d'un condensateur de charge, une tension redressée, régulée et filtrée à partir du réseau de courant alternatif (6).

10. Circuit d'attaque selon l'une des revendications 1 à 9,
caractérisé en ce que
le redresseur (2) comporte un circuit de surveillance (2a) pour limiter le courant de branchement et le courant de dépassement pour l'étage de puissance (3).

11. Circuit d'attaque selon l'une des revendications 1 à 10,
caractérisé par
un circuit de redémarrage qui fournit une tension d'alimentation distincte à l'étage d'attaque intermédiaire (3a), cette tension d'alimentation distincte contenant soit une valeur nominale dans la mesure où le moteur se trouve dans sa phase de fonctionnement régulière, soit la tension d'alimentation séparée fournie d'une manière intermittente à l'étage d'attaque intermédiaire (3a) dans la mesure où le moteur est bloqué ou en surcharge.

12. Circuit d'attaque selon la revendication 11,
caractérisé en ce que
le circuit de redémarrage reçoit une suite d'impulsions de déclenchement, le signal de sortie du circuit de redémarrage ayant un niveau de tension prédéfini dans la mesure où les impulsions de déclenchement présentent une fréquence supérieure à une fréquence limite prédéterminée, et le signal de sortie du circuit de redémarrage présentant un autre niveau de tension prédéfini dans la mesure où les impulsions de déclenchement ont une fréquence plus faible qu'une fréquence limite prédéterminée, le circuit de redémarrage ayant un composant de commande de temps (555), une résistance de charge (432), une résistance de décharge (433), un condensateur (435), des diodes de découplage (434), un déchargeur (437) et un amplificateur (438).

13. Circuit d'attaque selon l'une des revendications 1 à 12,
caractérisé en ce que
l'étage d'attaque intermédiaire (3a) comporte pour chaque signal de sortie (13a, 13b) du circuit de commande (4), un étage amplificateur à transistor (423, 424) dans le circuit d'émetteur avec, en aval, un étage de régulation de courant (425, 426), une sortie de l'étage de régulation de courant (425, 426) étant couplée à une entrée de commande d'un étage de sortie de puissance (3), associé.

14. Circuit d'attaque selon la revendication 13,
caractérisé en ce que
l'étage de régulation de courant (425, 426) est un amplificateur opérationnel à réaction dont l'entrée non inversée (+) est reliée à une sortie du circuit d'émetteur de l'amplificateur à transistor (423, 424), dont l'entrée inversée (-) est reliée à la sortie de l'amplificateur opérationnel par une résistance de réaction, et dont la sortie est couplée à l'entrée de commande de l'étage de sortie de puissance (3).

15. Circuit d'attaque selon la revendication 14,
caractérisé par
une résistance de collecteur comme résistance de mesure d'intensité (415, 416) branchée entre le potentiel de référence et l'entrée non inversée (+) de l'amplificateur opérationnel (425, 426).
